# EUROPEAN PATENT APPLICATION

(11) **EP 2 410 143 A1**
(43) Date of publication of application: **25.01.2012**
(21) Application number: 10753478.6
(22) Date of filing: 15.03.2010
(51) Int. Cl.: F01N 3/02, F01N 3/08

(54) **EXHAUST GAS CLEANING DEVICE**

(30) Priority: 16.03.2009 JP 2009063430
(71) Applicant: Daihatsu Motor Co., Ltd., Ikeda-shi, Osaka 563-8651 (JP)
(72) Inventor: MADOKORO, Kazuhiko, Gamo-gun Shiga 520-2593 (JP); OGAWA, Takashi, Gamo-gun Shiga 520-2593 (JP); NAITO, Kazuya, Gamo-gun Shiga 520-2593 (JP); KIM, Yoonho, Gamo-gun Shiga 520-2593 (JP); FUJIKAWA, Hirotoshi, Gamo-gun Shiga 520-2593 (JP); TANAKA, Hirohisa, Gamo-gun Shiga 520-2593 (JP)
(74) Representative: Zimmermann, Tankred Klaus
(86) International application number: PCT/JP2010/054266
(87) International publication number: WO 2010/106986

(57) **Abstract**

An exhaust gas purification apparatus 4 includes a plasma reactor 7 having gas flow passages 28 through which exhaust gas is to pass, and a power source 8 for supplying power to the plasma reactor 7 with a variable application voltage and/or a variable frequency of the application voltage of the power to be supplied. The exhaust gas purification apparatus 4 is adapted to change the application voltage and/or a pulse recurrence frequency of the application voltage, based on a change in amount of PM and/or flow rate of gas passing through the gas flow passages 28. Accordingly, efficient oxidization of PM in the exhaust gas and suppression of consumption of discharged power are achieved.

## Description

### TECHNICAL FIELD

The present invention relates to an apparatus for purifying exhaust gas by generating plasma.

### BACKGROUND ART

Exhaust gas emitted from an internal combustion engine, such as a diesel engine, contains particulate matter (PM) including soot, soluble organic fraction (SOF), sulfate, and the like. As such a kind of apparatus for purifying exhaust gas, there is a known apparatus that uses plasma for purification of exhaust gas.

For example, a plasma reactor is proposed (for example, refer to Patent Literature 1). The plasma reactor includes: a plasma reactor main body of a honeycomb tubular shape that allows exhaust gas to pass therethrough from a first end to a second end; a net-shaped positive electrode arranged on the first side of the plasma reactor main body; a conductive honeycomb filter (DPF) arranged on the second side of the plasma reactor main body for use as a negative electrode; and a pulse power source connected to the positive electrode and the honeycomb filter. In the plasma reactor, PM collected by the honeycomb filter is processed using plasma generated within the plasma reactor main body by supplying power to the positive electrode and the honeycomb filter. Pulse power supplied by the pulse power source is made constant by fixing an application voltage and a pulse recurrence frequency.

Incidentally, the flow rate of exhaust gas passing through the plasma reactor main body and the amount of PM within the exhaust gas may vary with time during operation of the internal combustion engine, depending on an operational state. According to the method conducted heretofore where the application voltage and the pulse recurrence frequency are fixed on generation of plasma, the intensity of the plasma and the amount of plasma generation per unit time are fixed regardless of the temporal change in the PM amount and the gas flow rate. This causes a situation in which discharged power is wasted if the intensity of plasma exceeds a required amount with respect to the PM amount. On the other hand, this causes a situation in which a decrease in efficiency of PM oxidation occurs when the intensity of plasma is below a required amount. Further, similar situations arise in the relationship between the plasma generation amount and the gas flow rate.

### Citation List

### Patent Literature

Patent Literature 1: JP-A-2007-270649

### DISCLOSURE OF THE INVENTION

### PROBLEMS TO BE SOLVED BY THE INVENTION

An object of the present invention is to provide an exhaust gas purification apparatus for efficiently oxidizing PM in exhaust gas and suppressing consumption of discharged power.

### SOLUTIONS TO THE PROBLEM

To attain the foregoing object, an exhaust gas purification apparatus according to a first aspect of the present invention includes: a gas flow passage that is formed to let exhaust gas pass therethrough; plasma generation means for generating plasma in the gas flow passage upon supply of power; a variable-voltage power source for supplying power to the plasma generation means with a variable application voltage of the power to be supplied; and voltage control means for changing the application voltage based on a change in amount of PM passing through the gas flow passage.

This configuration allows the application voltage to vary with changes in the amount of PM passing through the gas flow passage. Therefore, for example, in an exhaust gas purifying process, the application voltage is made smaller when the PM amount relatively decreases, whereas the application voltage is made larger when the PM amount relatively increases. This allows for suppression of the total voltage to be applied until the end of the process while controlling the intensity of the plasma as appropriate with respect to the PM amount. As a result, efficient oxidation of the PM, as well as suppression of consumption of discharged power, is achieved.

In addition, an exhaust gas purification apparatus according to a second aspect of the present invention, includes: a gas flow passage that is formed to let exhaust gas pass therethrough; plasma generation means for generating plasma in the gas flow passage upon supply of power; a variable-frequency power source for supplying power to the plasma generation means with a variable frequency of an application voltage of the power to be supplied; and frequency control means for changing the frequency of the application voltage based on a change in flow rate of gas passing through the gas flow passage.

With this configuration, the frequency of the application voltage changes in accordance with the flow rate of gas passing through the gas flow passage. Therefore, for example, in an exhaust gas purifying process, the frequency is made higher when the gas flow rate relatively increases, and the frequency is made lower when the gas flow rate relatively decreases. This allows for reduction in total number of voltage application until the end of the process while generating plasma by applying voltage at appropriate intervals with respect to the gas flow rate. As a result, efficient oxidization of PM, as well as suppression of consumption of discharged power, is achieved.

Further, an exhaust gas purification apparatus according to a third aspect of the present invention, includes: a gas flow passage that is formed to let exhaust gas pass therethrough; plasma generation means for generating plasma in the gas flow passage upon supply of power; a variable voltage/variable frequency power source for supplying power to the plasma generation means with a variable application voltage of the power to be supplied and a variable frequency of the application voltage; and voltage/frequency control means for changing the application voltage based on a change in amount of PM passing through the gas flow passage and changing the frequency of the application voltage based on a change in flow rate of gas passing through the gas flow passage.

With this configuration, the application voltage varies with changes in the amount of PM passing through the gas flow passage, and the frequency of the application voltage changes in accordance with the flow rate of gas passing through the gas flow passage. Therefore, for example, in an exhaust gas purifying process, the application voltage is made smaller when the PM amount relatively decreases, and the application voltage is made larger when the PM amount relatively increases. This allows for suppression of the total voltage to be applied until the end of the process while controlling the intensity of plasma as appropriate with respect to the PM amount. In addition, for example, the frequency is made higher when the gas flow rate relatively increases, and the frequency is made lower when the gas flow rate relatively decreases. This allows for reduction in total number of voltage application until the end of the process while generating plasma by applying the voltage at appropriate intervals with respect to the gas flow rate. As a result, efficient oxidization of the PM, as well as suppression of consumption of discharged power, is achieved.

### EFFECTS OF THE INVENTION

With the exhaust gas purification apparatus of the present invention, it is possible to suppress the total voltage to be applied until the end of the process while controlling the intensity of the plasma as appropriate with respect to the PM amount and/or reduce the total number of voltage application until the end of the process while generating plasma by applying the voltage at appropriate intervals with respect to the gas flow rate. As a result, the exhaust gas purification apparatus of the present invention allows for efficient oxidization of PM and suppression of consumption of discharged power.

Objects, features, aspects, and advantages of the present invention will become more apparent by referring to the following detailed description and the accompanying drawings.

### BRIEF DESCRIPTION OF THE DRAWINGS

Fig. 1 is a configuration diagram of major components of a diesel vehicle equipped with an exhaust gas purification apparatus depicting one embodiment of the present invention.
Fig. 2 is a schematic configuration diagram of a plasma reactor depicted in Fig. 1.
Fig. 3 is an enlarged perspective view of electrodes and a dielectric body depicted in Fig. 2.
Figs. 4A and 4B are flowcharts illustrating procedures for control performed by the exhaust gas purification apparatus, where Fig. 4A illustrates a procedure in a first voltage control mode, and Fig. 4B illustrates a procedure in a second voltage control mode.
Figs. 5A and 5B are time charts for illustrating a correlation between an accelerator opening and PM particles concentration, where Fig. 5A illustrates temporal change in accelerator opening, and Fig. 5B illustrates temporal change in PM particles concentration.
Figs. 6A and 6B are flowcharts illustrating procedures for control performed by the exhaust gas purification apparatus, where Fig. 6A illustrates a procedure in a first frequency control mode, and Fig. 6B illustrates a procedure in a second frequency control mode.
Figs. 7A and 7B are time charts illustrating temporal change in the accelerator opening and the intake air mass in JC08 hot mode, where Fig. 7A illustrates temporal change in accelerator opening, and Fig. 7B illustrates temporal change in intake air mass;
Figs. 8A and 8B are time charts illustrating progress statuses of the voltage control mode in Example 1, where Fig. 8A illustrates temporal change in PM particles concentration, and Fig. 8B illustrates temporal change in peak voltage.
Figs. 9A and 9B are time charts illustrating progress statuses of the frequency control mode in Example 1, where Fig. 9A illustrates temporal change in intake air mass, and Fig. 9B illustrates temporal change in pulse frequency.
Figs. 10A and 10B are time charts illustrating temporal change statuses in discharged power and vehicle speed in Example 1, where Fig. 10A illustrates temporal change in discharged power, and Fig. 10B illustrates temporal change in vehicle speed.
Figs. 11A and 11B are time charts illustrating temporal change statuses in emitted PM amount, where Fig. 11A illustrates a temporal change status in emitted PM amount in Example 1, and Fig. 11B illustrates a temporal change status in emitted PM amount in Comparative example 1.
Fig. 12 is a bar graph illustrating PM emission in Example 1 and Comparative examples 1 and 2.

### BEST MODE FOR CARRYING OUT THE INVENTION

### 1. Configuration of a diesel vehicle

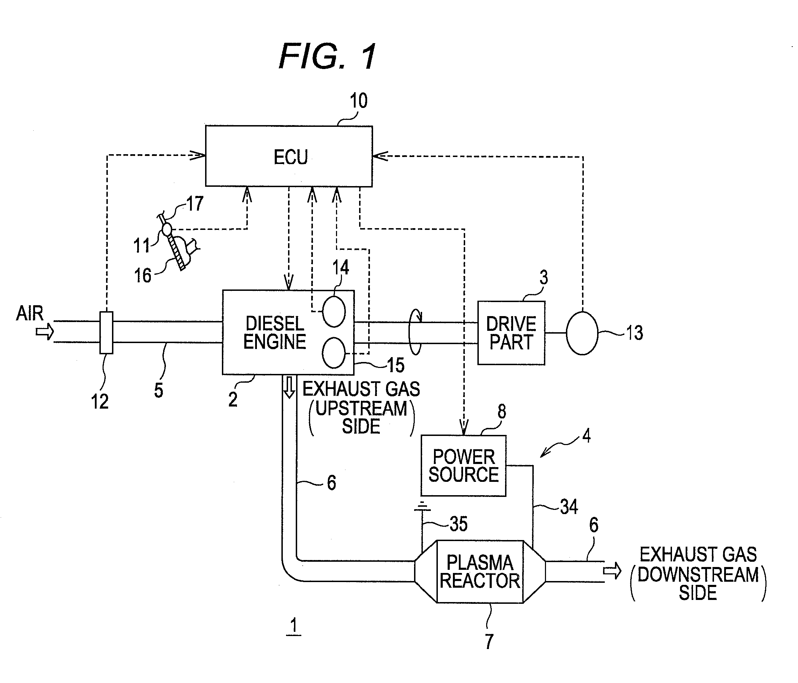

Fig. 1 is a configuration diagram of major components of a diesel vehicle equipped with an exhaust gas purification apparatus 4 depicting one embodiment of the present invention. The diesel vehicle 1 includes a diesel engine 2, a drive part 3, and the exhaust gas purification apparatus 4. The diesel engine 2 may be either 2-cycle engine or a 4-cycle engine. In addition, the displacement of the diesel engine 2 may be set as appropriate according to the intended use. The diesel engine 2 has an intake port (not shown) connected to an intake pipe 5. In addition, the diesel engine 2 has an exhaust port (not shown) connected to an exhaust pipe 6.

The drive part 3 includes wheels for causing the diesel vehicle 1 to move forward and backward, a power train for transmitting rotational force generated at the diesel engine 2 to the wheels, and other components. The exhaust gas purification apparatus 4 includes a plasma reactor 7 serving as plasma generation means provided in the middle of the exhaust pipe 6, a power source 8 for supplying power to the plasma generator 7, sensors 11 to 15 for detecting changes in physical quantities of components in the diesel vehicle 1, and an electronic control unit (ECU) 10 serving as control means for executing electric control of the diesel vehicle 1 based on detection information from the sensors 11 to 15. The plasma reactor 7 is provided as a portion of the exhaust pipe 6 and is adapted to generate plasma in the exhaust pipe 6 upon application of power.

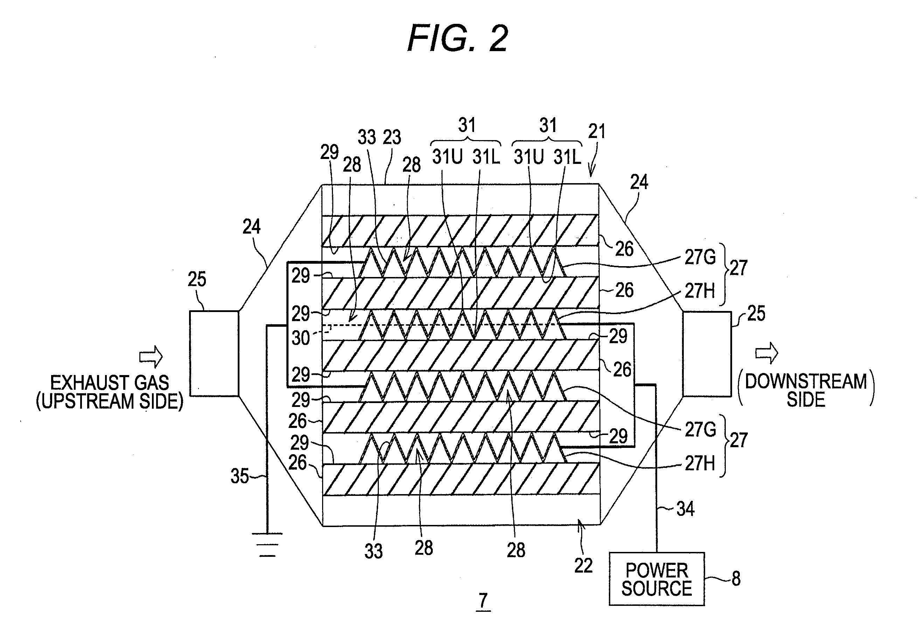

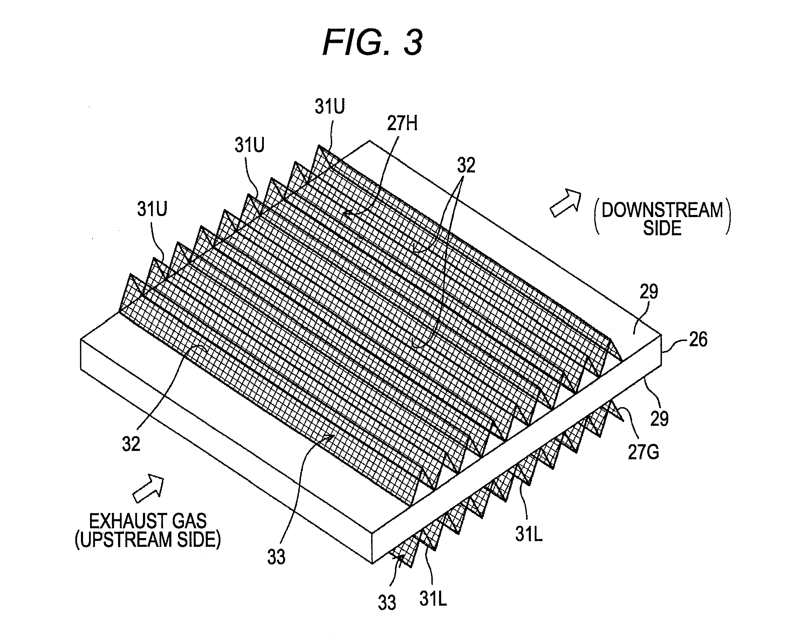

A specific configuration of the plasma reactor 7 is described below in detail with reference to Figs. 2 and 3. Fig. 2 is a diagram depicting a schematic configuration of the plasma reactor 7. Fig. 3 is an enlarged perspective view of electrodes and a dielectric body depicted in Fig. 2. Examples of the power source 8 include a direct-current power source, an alternating-current power source, and a pulse power source. These power sources are all variable in application voltage.
Preferably, the power source 8 is an alternating-current power source or a pulse power source in which the frequency of application voltage is variable. More preferably, the power source 8 is a pulse power source, and further preferably, is an alternating-current pulse power source. Unless specified otherwise, the power source 8 is described below as an alternating-current pulse power source.

The sensors 11 to 15 are electrically connected to the ECU 10. These sensors 11 to 15 include an accelerator sensor 11, an air flow meter 12, a vehicle speed sensor 13, and a crank positioning sensor 14, and a water temperature sensor 15. The accelerator sensor 11 is provided at a supporting arm 17 supporting an accelerator pedal 16 of the diesel vehicle 1, for example. The accelerator sensor 11 is adapted to detect the amount of depression of the accelerator pedal 16 (accelerator opening) in the form of an electric signal, and to input the detected electric signal into the ECU 10.

The air flow meter 12 is provided in the middle of the intake pipe 5. The air flow meter 12 is adapted to detect the intake mass of air passing through the intake pipe 5 as an electric signal, and to input the detected electric signal into the ECU 10. The kind of the air flow meter 12 may be a hot-wire type, a vacuum sensor type, a Karman vortex type, or a vane type, for example. The vehicle speed sensor 13 is provided, for example, at a rotor mechanism (not shown) disposed on the back sides of the wheels at the drive part 3. The vehicle sensor 13 is adapted to detect the number of rotation of the wheels in the form of an electric signal, and to input the detected electric signal into the ECU 10. The ECU 10 can calculate the vehicle speed of the diesel vehicle 1 on the basis of the number of rotation of the wheels.

The crank positioning sensor 14 is provided, for example, in the vicinity of a crank pulley (not shown) of the diesel engine 2. The crank positioning sensor 14 is adapted to detect the number of rotation of the diesel engine 2 in the form of an electric signal, and to input the detected electric signal into the ECU 10. The water temperature sensor 15 is provided at a cylinder head (not shown) of the diesel engine 2, for example. The water temperature sensor 15 is adapted to detect the temperature of cooling water in the diesel engine 2 in the form of an electric signal, and to input the detected electric signal into the ECU 10. The ECU 10 is adapted to calculate the temperature of the diesel engine 2 based on the temperature of the cooling water.

The ECU 10 includes a microcomputer having a CPU, a ROM, a RAM, and other components. The ECU 10 is electrically connected to the power source 8, and is adapted to control an application peak voltage and a pulse recurrence frequency (hereinafter referred to as pulse frequency) of an application voltage of power supplied from the power source 8 to the plasma reactor 7, in accordance with the electric signals inputted from the sensors 11 to 15. In addition, the ECU 10 is electrically connected to an injector (not shown) in the diesel engine 2, for example, and is adapted to control the amount of fuel injection (a fuel flow rate) from the injector to a combustion chamber (not shown).

### 2. Configuration of a plasma reactor

Fig. 2 is a diagram depicting a schematic configuration of the plasma reactor depicted in Fig. 1. Fig. 3 is an enlarged perspective view of electrodes and a dielectric body depicted in Fig. 2. The plasma reactor 7 includes a flow passage forming tube 21 forming a portion of the exhaust pipe 6, and a plasma generation part 22 for generating plasma in the flow passage forming tube 21. In addition, the capacity of the plasma reactor 7 is 0.5 to 5 L (liters), for example. The flow passage forming tube 21 is formed using stainless steel, for example. The flow passage forming tube 21 has an approximately quadrangular square tube 23, and conical tubes 24 making up a pair connected to two longitudinal end portions, respectively, of the square tube 23. The conical tubes 24 are formed in the shape of a cone narrowed down from the two end portions toward the longitudinal outside of the square tube 23.

The conical tubes 24 are formed symmetrically with respect to the square tube 23. Approximately cylindrical circular tubes 25 are connected to the conical tubes 24 on a side opposite the side facing the square tube 23 for connection between the flow passage forming tube 21 and the exhaust pipe 6. The conical tubes 24 do not have to be symmetric with respect to the square tube 23. The flow passage forming tube 21 has a first circular tube 25 connected to the exhaust pipe 6 on the upstream side of a flow direction of exhaust gas, and has a second circular tube 25 connected to the exhaust pipe 6 on the downstream side of the same direction. Accordingly, the flow passage forming tube 21 is interposed between the upstream-side exhaust pipe 6 and the downstream-side exhaust pipe 6. Therefore, exhaust gas flows from the upstream-side exhaust pipe 6 into a first circular tube 25, flows through a first conical tube 24, the square tube 23, and a second conical tube 24 along a longitudinal direction of the square tube 23, and flows out to the downstream-side exhaust pipe 6 through the second circular tube 25.

The plasma generation part 22 is provided in the flow passage forming tube 21, and includes approximately square plate-shaped dielectric plates 26, electrodes 27 sandwiched between the dielectric plates 26 and to which a voltage is applied for generating plasma, and gas flow passages 28 in which plasma is generated by application of voltage to the electrodes 27. The dielectric plates 26 are separated from each other in a perpendicular direction orthogonal to the flow direction of exhaust gas. Specifically, for example, five dielectric plates 26 are layered one on top of another and the surfaces 29 of the plates are extended between a pair of opposite peripheral walls of the square tube 23 so as to be in parallel to the peripheral walls of the square tube 23 (along the longitudinal direction of the square tube 23). Accordingly, the gas flow passages 28 are formed between the opposing dielectric plates 26 within the square tube 23. Therefore, within the square tube 23, exhaust gas flows through the gas flow passages 28 along the surfaces 29 of the dielectric plates 26.

Examples of the materials constituting the dielectric plates 26 include low-dielectric-constant materials such as Al₂O₃ (aluminum oxide), ZrO₂ (zirconium oxide), and AlN (aluminum nitride); and high-dielectric-constant materials such as BaTiO₃ (barium titanate), SrTiO₃ (strontium titanate), Ba (Sr), and TiO₃ (barium strontium titanate).

The electrodes 27 are made of flat metal nets and are formed in the shape of a triangular wave vertically undulating with a specific amplitude and with a specific wavelength, taking a virtual line 30 as a reference of height. The triangular wave-shaped electrodes 27 have ridgelines 31. These ridgelines 31 are arranged alternately between upper and lower sides at equidistances therebetween at positions separated vertically at a specific distance from the virtual line 30. To form these electrodes 27, first, a plurality of metal wire materials is aligned at intervals in a first direction, for example. Then, a plurality of other wire materials is interwoven with the aligned wire materials in a second direction orthogonal to the first direction. This results in a generally square metal net having a large number of meshes 32 over the entire area thereof. Next, the metal net is folded a plurality of times at specific intervals so as to form the ridgelines 31 parallel to a pair of opposite sides of the metal net. In the manner as described above, the electrodes 27 are formed.

In each of the electrodes 27, a rectangle is defined by ridgelines 31U above the virtual line 30 and ridgelines 31 L under the virtual line and by wire materials forming a contour of the electrode 27. This rectangle acts as a collection part 33 to perform the functions of letting exhaust gas pass through by the meshes 32 and collecting PM in the exhaust gas. Examples of metal for forming the wire materials include stainless steel (SUS), nickel, copper, and tungsten. In addition, the metal net may be formed by aligning a plurality of wire materials in a first direction, aligning on the plurality of wire materials a plurality of other wire materials at intervals in a second direction such that the wire materials aligned in the first direction and the second direction intersect, and fixing the wire materials at intersecting points by welding or using, for example, an adhesive. Further, the shape of the meshes 32 may be, for example, a rectangular, a triangle, or a rhombus, by changing the manner of interweaving the metal net.

In addition, the electrodes 27 are provided one for each of the gas flow passages 28, four in total, such that the ridgelines 31 are orthogonal to the flow direction of exhaust gas and that the ridgelines 31 contact the surfaces 29 of the dielectric plates 26. The collection parts 33 of the electrodes 27 are raised at an angle with respect to the surfaces 29 of the dielectric plates 26. As a result, exhaust gas flowing through the gas flow passages 28 can be allowed to impinge on the collection parts 33. In the electrodes 27, electrodes connected to high-voltage lines 34 and electrodes connected to grounding lines 35 are alternately connected in sequence from the lower side in the direction of layering. That is, the electrodes 27 are distinguished between a high-voltage pole 27H and a grounding pole 27G depending on the kinds of lines to be connected.

The high-voltage lines 34 are electrically connected at their first ends to the high-voltage poles 27H, and are bundled into one and connected at their second ends to the power source 8. Meanwhile, the grounding lines 35 are electrically connected at their first ends to the grounding poles 27G, and are bundled into one and grounded at their second ends. Although not depicted in Fig. 2, the high-voltage line 34 has a part penetrating the flow passage forming tube 21 (contacting the flow passage forming tube 21), which is coated with an insulator (for example, Al₂O₃). Accordingly, the high-voltage lines 34 and the flow passage forming tube 21 are insulated from each other.

### 3. Purifying process by the exhaust gas purification apparatus

In the foregoing diesel vehicle 1, exhaust gas is purified by the exhaust gas purification apparatus 4 during operation of the diesel engine 2. Specifically, a pulse voltage is applied to the high-voltage poles 27H of the plasma reactor 7 to generate plasma containing active species, such as charged particles (ions and electrons) or free radicals, within the gas flow passages 28 (exhaust pipes 6). Then, the active species oxidize PM in the exhaust gas passing through the gas flow passages 28, thereby purifying the exhaust gas. In the purifying process, the exhaust gas purification apparatus 4 executes a voltage control mode in which an application peak voltage is controlled in accordance with the operational status of the diesel engine 2 and a frequency control mode in which a pulse frequency of an application voltage is controlled. During operation of the diesel engine 2, these modes may be alternately executed or concurrently executed in parallel.

### a. Voltage control mode

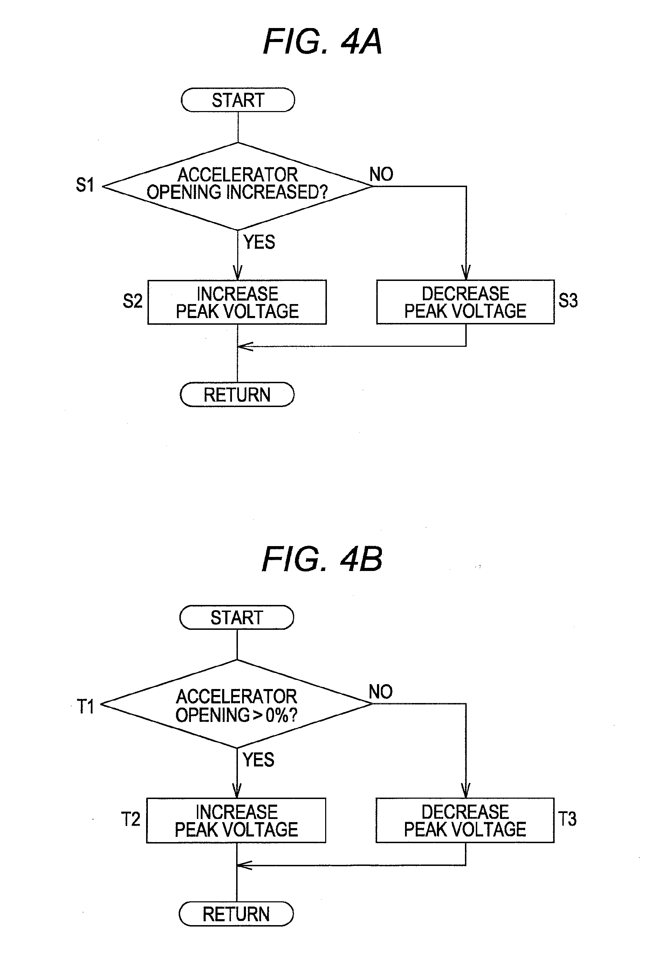

Figs. 4A and 4B are flowcharts of procedures of control performed by the exhaust gas purification apparatus, where Fig. 4A illustrates a procedure for a first voltage control mode and Fig. 4B illustrates a procedure for a second voltage control mode. Feasible voltage control modes are, for example, the first voltage control mode a control flow of which is illustrated in Fig. 4A and the second voltage control mode a control flow of which is illustrated in Fig. 4B.

In the first voltage control mode, a control flow is iteratively executed to constantly monitor the accelerator opening inputted into the ECU 10 and steplessly change the peak voltage according to the change in accelerator opening. Specifically, the accelerator opening may be set at 0 (%) in a state where the accelerator pedal 16 is not depressed, while the accelerator opening may be set at 100 (%) in a state where the accelerator pedal 16 depressed fully. Under these conditions, when the accelerator opening increases relatively (YES in step S1), the peak voltage is increased in proportion to an increase in the accelerator opening, for example (step S2). That is, for example, the peak voltage is increased so that the rate of increase in the accelerator opening can be equal to the rate of increase in the peak voltage.

On the other hand, when the accelerator opening relatively decreases (NO in step S1), the peak voltage is decreased, for example, at the rate of decrease in the accelerator opening (step S3). That is, for example, the peak voltage is decreased so that the rate of decrease in the accelerator opening can be equal to the rate of decrease in the peak voltage. The foregoing control flow is continuously executed without stopping, for example, from the start to end of operation of the diesel engine 2.

The accelerator opening is one of factors for determining the amount of injection of fuel to be injected from the injector (not shown) of the diesel engine 2 to the combustion chamber (not shown). That is, the amount of fuel injection is decided on the basis of the accelerator opening and other factor(s) as necessary (for example, the engine temperature). With increase in the amount of fuel injection, oxygen for combustion becomes lacking and incomplete combustion is likely to occur. In addition, the occurrence of incomplete combustion becomes conspicuous if the intake pipe 5 is not provided with a throttle valve for regulating the intake air mass. As the result of the incomplete combustion, exhaust gas contains a larger amount of PM than the case of complete combustion.

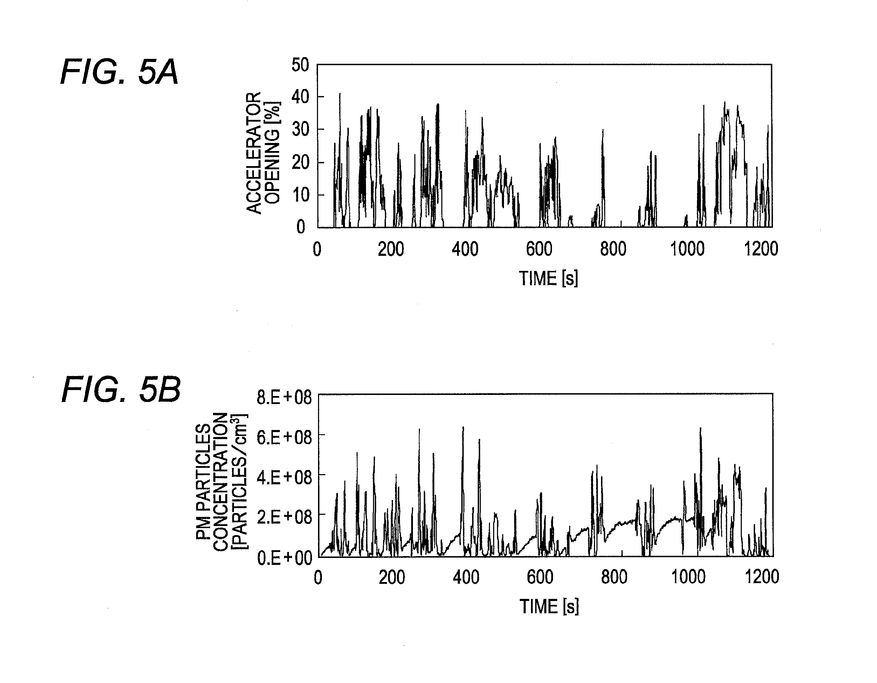

Therefore, the amount of PM in exhaust gas correlates with the accelerator opening. For example, when the accelerator opening increases, it is presumed that the PM particles concentration will increase at the rate of increase in the accelerator opening. On the other hand, when the accelerator opening decreases, it is presumed that the PM particles concentration will decrease at the rate of decrease in the accelerator opening. Figs. 5A and 5B, for example, prove such a correlation. Figs. 5A and 5B are time charts for illustrating a correlation between the accelerator opening and the PM particles concentration. Fig. 5A illustrates temporal change in the accelerator opening, and Fig. 5B illustrates temporal change in the PM particles concentration. Specifically, in the first voltage control mode to change the peak voltage based on a change in the accelerator opening, the peak voltage is controlled to be increased at the rate of increase in the PM particles concentration when it is presumed that the PM particles concentration will increase. In addition, in this mode, when it is presumed that the PM particles concentration will decrease, the peak voltage is controlled to be decreased at the rate of decrease in the PM particles concentration. The PM particles concentration in the voltage control mode refers to the number of particles of PM per unit volume (cm³) of exhaust gas.

In the second voltage control mode, a control flow is iteratively executed to monitor constantly the accelerator opening and stepwisely change the peak voltage, for example, at a specific rate according to the change in accelerator opening (the second voltage control mode). Specifically, for example, the peak voltage is increased at the rate of 0.5 to 2 kV/s when the accelerator opening is larger than 0% (YES in step T1) (step T2). On the other hand, for example, the peak voltage is decreased at the rate of 1 to 5 kV/s when the accelerator opening becomes 0% (NO in step T1) (step T3). The foregoing control flow to change the peak voltage in a stepwise manner is continuously executed without stopping, for example, from the start to end of operation of the diesel engine 2.

The amount of PM in exhaust gas correlates with the accelerator opening as stated above. Specifically, in the second voltage control mode, the peak voltage is increased at a specific rate (0.5 to 2 kV/s) when it is presumed that the PM particles concentration in exhaust gas will increase beyond the PM particles concentration corresponding to the accelerator opening of 0 (%). In addition, the peak voltage is decreased at a specific rate (1 to 5 kV/s).when it is presumed that the PM particles concentration in exhaust gas will decrease to be equal to or less than the PM particles concentration corresponding to the accelerator opening of 0 (%),

### b. Frequency control mode

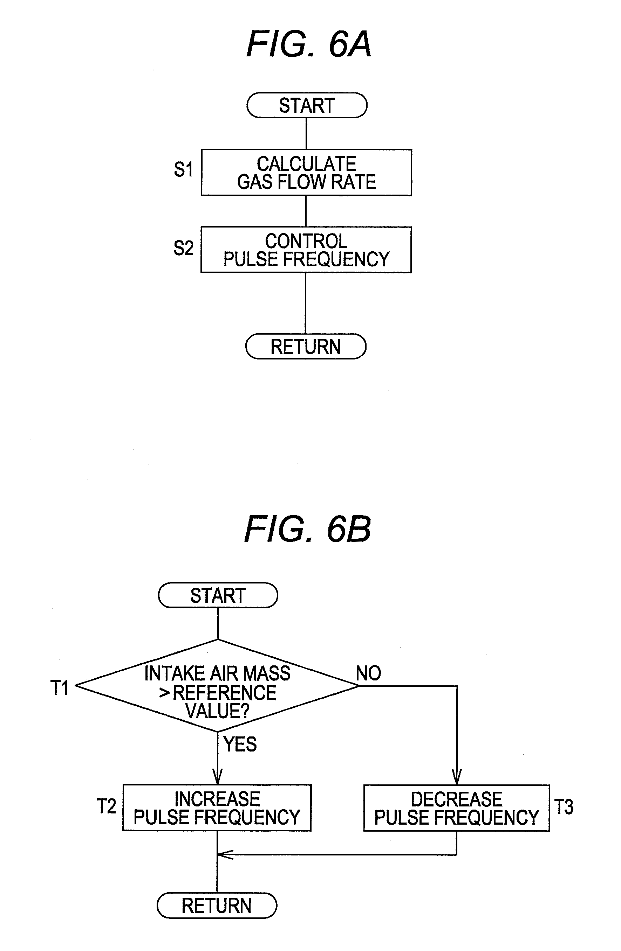

Figs. 6A and 6B are flowcharts illustrating procedures for control performed by the exhaust gas purification apparatus. Fig. 6A illustrates a procedure in the first frequency control mode, and Fig. 6B illustrates a procedure in the second frequency control mode. In the first frequency control mode, for example, the intake air mass inputted into the ECU 10 is constantly monitored. Then, a control flow is iteratively executed to calculate the flow rate of exhaust gas passing through the plasma reactor 7 and steplessly change a pulse frequency according to the intake air mass. Specifically, first, the flow rate of gas emitted from the diesel engine 2 is calculated based on the intake air mass and other factor(s) as necessary (for example, the amount of fuel injection) (step S1).

Then, in the case where exhaust gas of the calculated flow rate passes through the plasma reactor 7, the pulse frequency is controlled such that the number of pulses counted from the instant at which the exhaust gas flows into the plasma reactor 7 to the instant at which the exhaust gas flows out of the plasma reactor (the number of pulses per specific volume of exhaust gas) is constantly 1 to 10 (step S2). In this manner, the control flow is executed to constantly fix the number of pulses per specific volume of exhaust gas. In addition, the control flow is continuously executed without stopping, for example, from the start to end of operation of the diesel engine 2.

In the second frequency control mode, for example, the control flow is iteratively executed to constantly monitor the intake air mass inputted into the ECU 10 and to stepwisely change the pulse frequency of an application voltage at a specific rate according to a change in the intake air mass. Specifically, in the case where an intake air mass signal is higher than a reference value (YES in step T1), for example, the pulse frequency is increased at the rate of 5 to 50 Hz/s (step T2). On the other hand, in the case where the intake air mass signal is equal to the reference value (NO in step T1), for example, the pulse frequency is decreased at the rate of 10 to 100 Hz/s (step T3). The foregoing control flow to stepwisely change the pulse frequency in a stepwise manner is continuously exercised without stopping, for example, from the start to end of operation of the diesel engine 2.

The reference value of the intake air mass in the second frequency mode is an intake air mass at the time of, for example, idling during which the intake air mass is comparatively smaller. Specifically, for example, the reference value may be 2 to 10 g/s but varies depending on the amount of emission from the diesel engine 2.

The flow rate of exhaust gas from the diesel engine 2 varies with changes in the intake air mass. The more the intake air mass increases, the more the gas flow rate increases.. The increased gas flow rate results in an increase in amount of exhaust gas to be purified by the plasma reactor 7 per unit. That is, in the second frequency control mode where the pulse frequency varies with changes in the intake air mass, the pulse frequency is increased at a specific rate of increase (5 to 50 Hz/s) when it is presumed that the flow rate of exhaust gas will increase beyond the flow rate corresponding to the reference value of the intake air mass,. On the other hand, when it is presumed that the flow rate of exhaust gas will decrease to be equal to or less than the flow rate corresponding to the reference value of the intake air mass, the pulse frequency is decreased at a specific rate of decrease (10 to 100 Hz/s).

### 4. Operations and effects

As described above, with the exhaust gas purification apparatus 4, when it is presumed that the PM particles concentration in exhaust gas will increase with increase in the accelerator opening by the execution of the first voltage control mode, the peak voltage is increased at the rate of increase in the PM particles concentration. Accordingly, even if the PM particles concentration in the gas flow passages 28 increases and becomes high, plasma strong enough to oxidize PM in the particles concentration is produceable within the gas flow passages 28. On the other hand, when it is presumed that the PM particles concentration in exhaust gas will decrease with decrease in the accelerator opening, the peak voltage is decreased at the rate of decrease in the PM particles concentration. Accordingly, the application peak voltage is suppressable while the intensity of plasma generated in the gas flow passages 28 to is held to such a degree that the plasma can oxidize a small amount of PM passing through the gas flow passages 28.

As a result of the foregoing, the execution of the first voltage control mode may effectively oxidize PM and reduce the total application voltage until the end of operation of the diesel engine 2. This may reduce consumption of discharged power. Further, in the first voltage control mode, the peak voltage is controlled to change in a stepless manner. Accordingly, the peak voltage is controllable in a precise manner in accordance with increase and decrease in the PM particles concentration.

In addition, when it is presumed that the PM particles concentration in exhaust gas will increase beyond a predetermined amount (in the case where the accelerator opening is less than 0%) by the execution of the second voltage control mode, the peak voltage is increased at a specific rate. Accordingly, even if the PM particles concentration in the gas flow passages 28 increases and becomes high, plasma strong enough to oxidize PM in the particles concentration is produceable in the gas flow passages 28. On the other hand, when it is presumed that the PM particles concentration in exhaust gas will decrease to be equal to or less than a predetermined amount (in the case of the accelerator opening = 0%), the peak voltage is decreased at a specific rate. Accordingly, the application peak voltage is suppressable while the intensity of plasma generated in the gas flow passages 28 is held to such a degree that the plasma can oxidize a small amount of PM passing through the gas flow passages 28.

As a result of the foregoing, the execution of the second voltage control mode allows for efficient oxidization of PM and suppression of the total application voltage until the end of operation of the diesel engine 2. Accordingly, consumption of discharged power is suppressed. Further, in the second voltage control mode, the peak voltage is controlled to change at a specific rate in a stepwise manner. Accordingly, the control flow is simplified. As a result, it is possible to shorten a response time from the instant at which the peak voltage is controlled to the instant at which the intensity of the plasma is controlled.

In addition, with the exhaust gas purification apparatus 4, the number of pulses counted from the instant at which exhaust gas flows into the plasma reactor 7 to the instant at which the exhaust gas flows out of the plasma reactor (exhaust gas passage time) is constantly fixed by the execution of the first frequency control mode. Specifically, in the case where the flow rate of exhaust gas is larger, the exhaust gas passage time becomes shorter. Therefore, the pulse frequency is made relatively higher. On the other hand, in the case where the flow rate of exhaust gas is smaller, the exhaust gas passage time becomes longer. Therefore, the pulse frequency is made relatively lower. This allows for, even if the flow rate of exhaust gas changes, generation of plasma of the same number of pulses with respect to various flow rates of exhaust gas passing through the plasma reactor 7, as well as suppression of the total number of peak voltage application until the end of operation of the diesel engine 2. As a result, efficient oxidization of PM is achieved along with suppression of consumption of discharged power.

In addition, when it is presumed that the gas flow rate will increase beyond a reference value by the execution of the second frequency control mode, the pulse frequency is increased at a specific rate. On the other hand, when it is presumed that the gas flow rate will decrease to be equal to or less than the reference value, the pulse frequency is decreased at a specific rate. This allows for reduction in number of peak voltage application when the gas flow rate is relatively smaller and the exhaust gas passage time is relatively longer. Therefore, the total number of peak voltage application until the end of operation is suppressed. As a result, efficient oxidization of PM, along with suppression of consumption of discharged power, is achieved.

In addition, with the exhaust gas purification apparatus 4, reduction in amount of PM emission after passing through the plasma reactor 7 by 42 to 62%, for example, is achievable as compared with the cases where a purifying process is performed with the peak voltage constantly fixed to 6.5 to 10 kV and the pulse frequency constantly fixed to 30 to 250 Hz. Besides, discharged power can be kept at almost the same intensity.

The present invention is not limited to by the foregoing description. Various design changes are possible within the scope of the appended claims. For example, in the foregoing embodiment, the peak voltage is controlled in the voltage control mode based on a change in the accelerator opening detected by the accelerator sensor 11. Alternatively, the peak voltage may be controlled based on information detected by other sensor(s). For example, the peak voltage may be controlled based on, for example, the engine rotational number detected by the crank positioning sensor 14, the engine temperature detected by the water temperature sensor 15, or the type of the diesel engine 2 (for example, displacement). Further, the peak voltage may be controlled based on a combination of these kinds of information (including the accelerator opening).

In addition, in the voltage control mode and the frequency control mode, the control flows does not have to be executed continuously during operation of the diesel engine 2. For example, the control flows may be intermittently performed. Although, in the foregoing embodiment, signals indicative of the accelerator opening and the intake air mass are inputted directly into the ECU 10, the method of inputting these signals are not limited to the foregoing method.

Applications of the exhaust gas purification apparatus according to the present invention include purification of exhaust gas emitted from a diesel engine and purification of exhaust gas emitted from a chemical plant, for example.

### Example

Next, the present invention will be described based on an example and a comparative example. The present invention is however not limited to by the following examples.

### Example 1

A test engine bench (type: 2-cycle diesel engine, displacement: 1,200 cc) was prepared. Then, a plasma reactor configured as depicted in Fig. 2 (with a capacity of 1.2 L), a PM particles concentration measurement apparatus (produced by CPC TSI Inc.), and a micro dilution tunnel (produced by Horiba, Ltd.), were mounted on the exhaust pipe of the test engine bench in sequence from the upstream side. An alternating-current pulse power source (in which the peak voltage and the pulse frequency are variable) was connected to a high-voltage pole of the plasma reactor. A PM collecting filter was attached to the micro dilution tunnel. Weighing the filter makes it possible to calculate the PM emission. In addition, the information about flow in the voltage control mode and the information about flow in the frequency control mode were stored in the ECU of the test engine bench stored. The specific conditions for the flows are shown below.

### a. Voltage control mode (stepwise control of the peak voltage)

The peak voltage was fixed to 6.5 kV when the accelerator opening was equal to 0 (%).
The peak voltage was increased at a rate of 0.5 kV/s (up to 8.0 kV) when the accelerator opening was larger than 0 (%).

### b. Frequency control mode (stepless control of the pulse frequency)

The pulse frequency was controlled on the basis of the flow rate of exhaust gas = (the intake air mass + the fuel flow rate), such that the number of pulses counted for a period of time between the instant at which the exhaust gas flowed into the plasma reactor and the instant at which the exhaust gas flowed out of the plasma reactor became constantly 3.5.

Then, the test engine bench was operated in JC08 hot mode (stipulated in the notice of the details of security standards for road trucking vehicles (Notice No. 619 given in 2002 by the Ministry of Land, Infrastructure, Transport and Tourism) defined in Attachment 42). During the operation, the voltage control mode and the frequency control modes were concurrently executed in parallel.

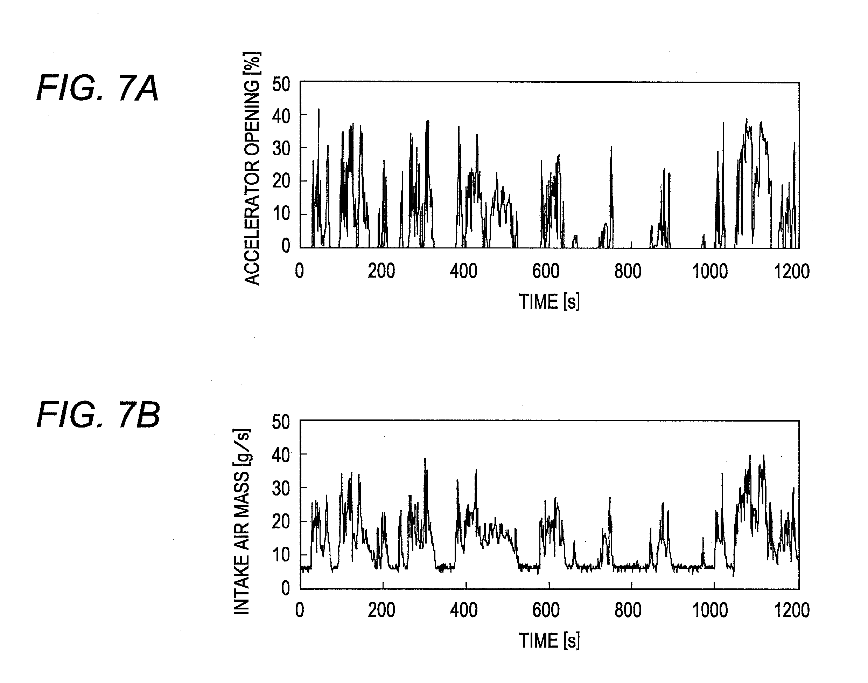

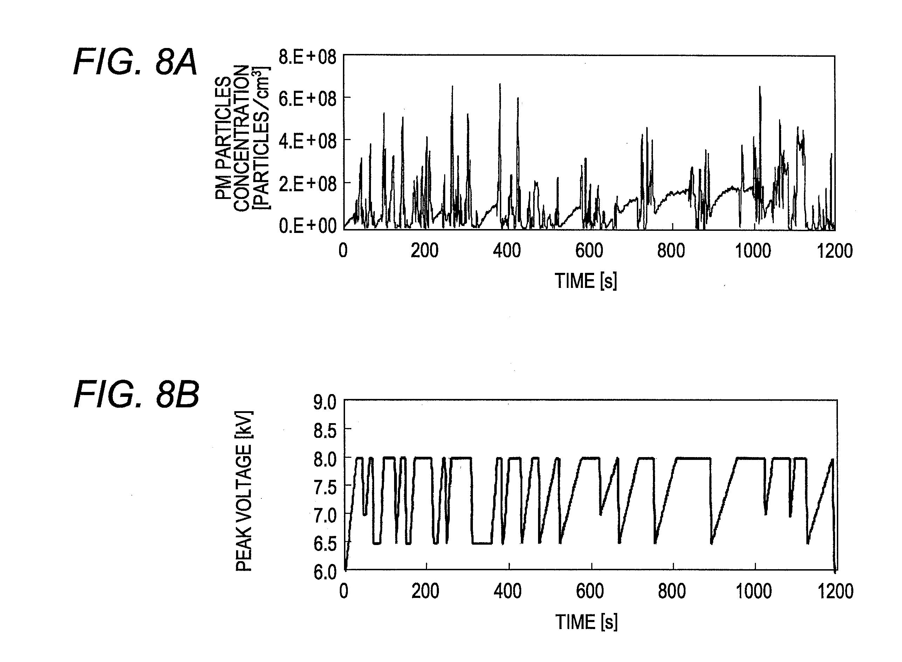

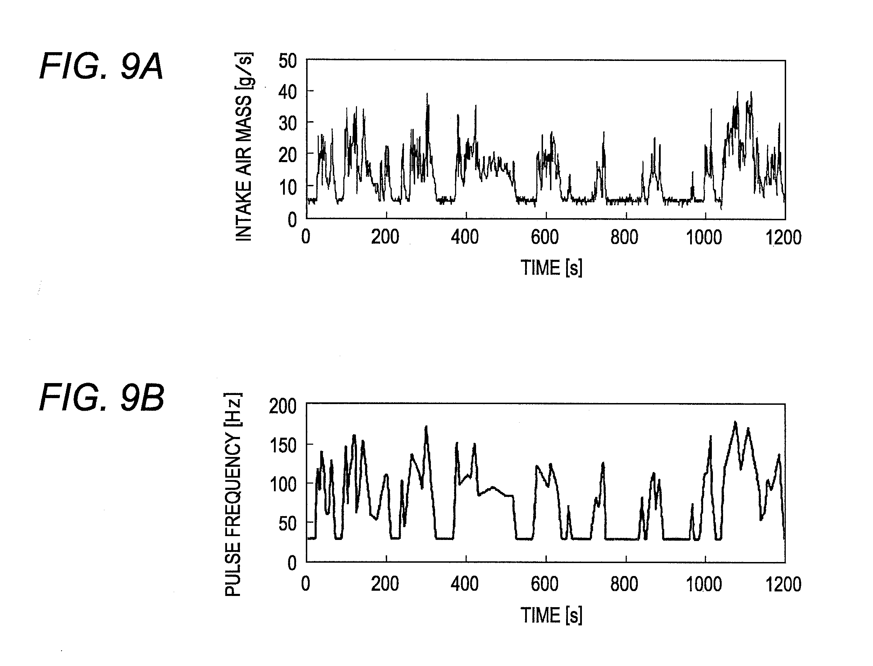

Figs. 7A and 7B are time charts illustrating temporal change statuses of the accelerator opening and the intake air mass in the JC08 hot mode, respectively. Fig. 7A illustrates temporal change in the accelerator opening, and Fig. 7B illustrates temporal change in the intake air mass. Figs. 8A and 8B are time charts illustrating progress statuses of the voltage control mode, respectively. Fig 8A illustrates temporal change in the PM particles concentration, and Fig. 8B illustrates temporal change in the peak voltage. Figs. 9A and 9B are time charts illustrating progress statuses of the frequency control mode, respectively. Fig 9A illustrates temporal change in the intake air mass, and Fig. 9B illustrates temporal change in the pulse frequency.

Referring to Figs. 8A and 8B, the followings were observed. Specifically, when the voltage control mode was executed to stepwisely control the peak voltage by determining that the accelerator opening is equal to 0 (%) or the accelerator opening was larger than 0 (%), the peak voltage was controlled at 6.5 kV in accordance with relative decrease in the PM particles concentration (accelerator opening = 0), and the peak voltage was controlled to be increased in a stepwise manner up to 8.0 kV in accordance with relative increase in the PM particles concentration (accelerator opening > 0). That is, the peak voltage was not fixed but varies with changes in the PM particles concentration.

Meanwhile, referring to Figs. 9A and 9B, the followings were observed. Specifically, when the frequency control mode was executed to control the pulse frequency such that the number of pulses counted for a period of time between the instant at which the exhaust gas flowed into the plasma reactor 7 and the instant at which the exhaust gas flowed out of the plasma reactor became constantly 3.5, the pulse frequency was controlled to be lower in accordance with relative decrease in the intake air mass (that is, relative decrease in the flow rate of exhaust gas), and the pulse frequency was controlled to be higher in accordance with relative increase in the intake air mass (that is, relative increase in the flow rate of exhaust gas). That is, the pulse frequency is not fixed but varied with changes in the flow rate of exhaust gas.

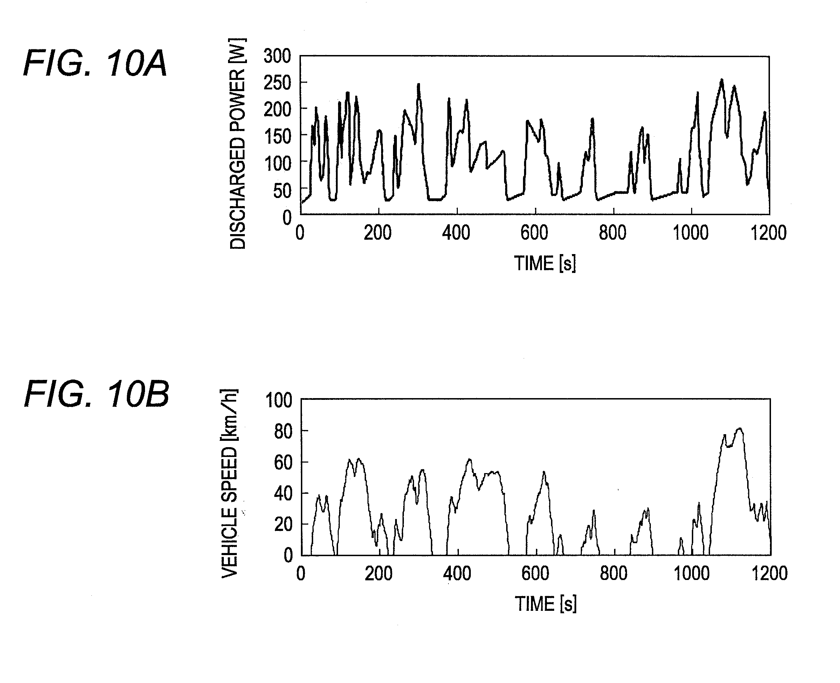

After the end of the operation, discharged power at each point in time during the operation was calculated based on the peak voltage and the pulse frequency, and was represented in a chart. Figs. 10A and 10B illustrate temporal change statuses of discharged power and vehicle speed, respectively. Fig. 10A illustrates temporal change in discharged power, and Fig. 10B illustrates temporal change in the vehicle speed. Referring to Figs. 10A and 10B, as a result of execution of the voltage control mode and the frequency control mode, it was observed that the discharged power decreased in accordance with relative decrease in the vehicle speed and increased in accordance with relative increase in the vehicle speed. In addition, it was observed that, by controlling the peak voltage and the pulse frequency based on the accelerator opening and the intake air mass, the start point of increase/decrease in the discharged power was antecedent to the start point of increase/decrease in the vehicle speed. Besides, the average discharged power was determined as 100 W by dividing by the operating time the sum of the discharged power measured at the points in time during the operation.

### Comparative example 1

A test engine bench was operated under the same conditions (JC08 hot mode) as those in Example 1, except that the voltage control mode and the frequency control mode were not executed but the peak voltage was fixed at 8 kV and the pulse frequency was fixed at 70 Hz. The average discharged power was determined as 100 W in the same manner as that in Example 1.

### Comparative example 2

A test engine bench was operated under the same conditions (JC08 hot mode) as those in Example 1, except that no plasma reactor or pulse power source was provided.

### PM emission evaluation test

### a. Test method

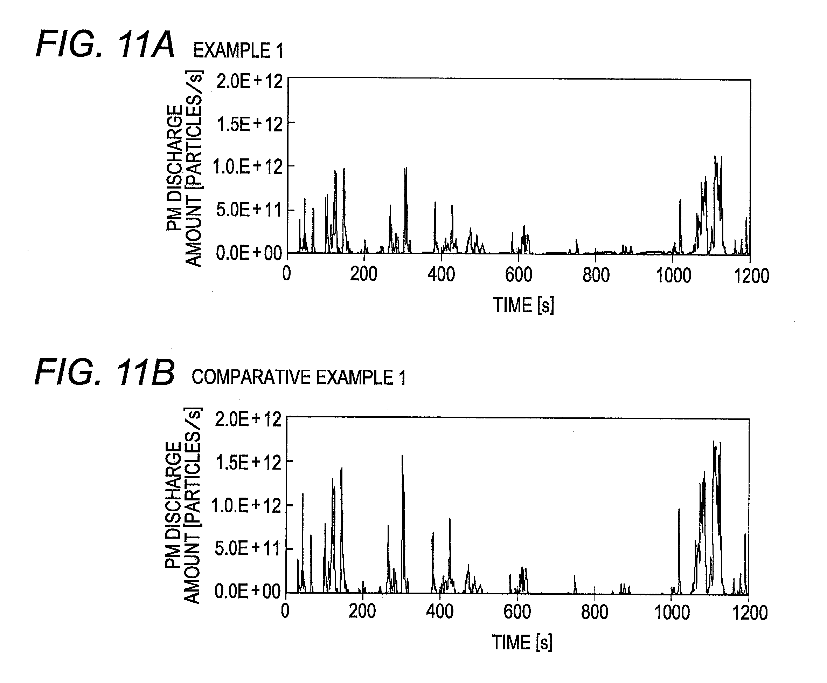

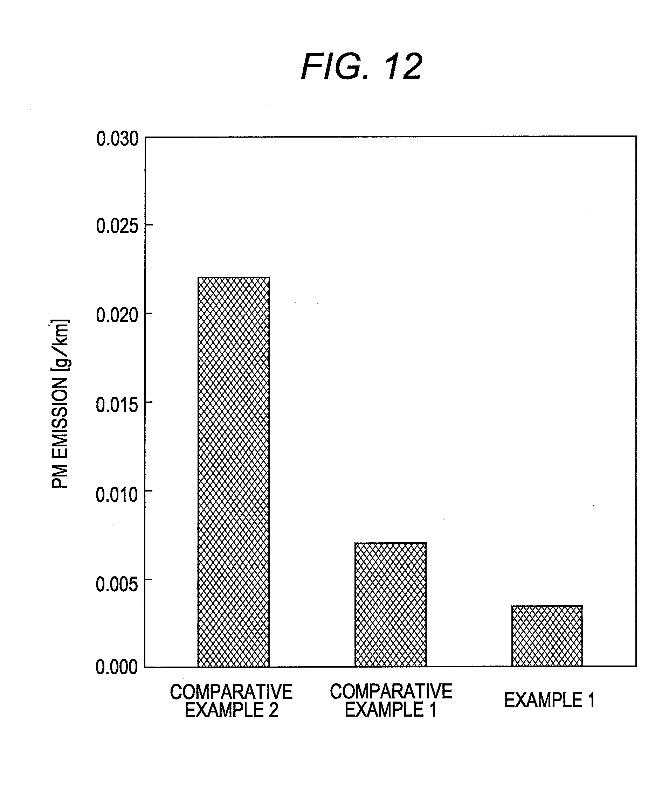

During operation of the test engine benches in Example 1 and Comparative examples 1 and 2, the respective amounts of PM discharged from the exhaust pipes of the test engine benches and passing through the micro dilution tunnel were measured. The rate of dilution of exhaust gas by air in a diluter was set at 50. Figs. 11A and 11B are time charts illustrating temporal change statuses in the amount of discharged PM, respectively. Fig. 11A illustrates temporal change in the amount of discharged PM in Example 1, and Fig. 11B illustrates temporal change in the amount of discharged PM in Comparative example 1. In addition, PM emission per unit running distance in JC08 hot mode were determined by weighing the PM collecting filter after PM collection. Fig. 12 illustrates a bar graph illustrating the results.

### b. Evaluations

Referring to Figs. 11A and 11B, it was observed that the amount of discharged PM in Example 1 was smaller than the amount of discharged PM in Comparative example 1 at any point in time during the operation. In particular, the amount of discharged PM in Example 1 was significantly different from the amount of discharged PM in Comparative example 1 in an acceleration region where the vehicle speed steeply increased. For example, the amount of discharged PM in Example 1 in 300 s was 8.4 × 10¹¹ particles/s, whereas the amount of discharged PM in Comparative example 1 was 1.4 × 10¹² particles/s. In addition, the amount of discharged PM in Example 1 in 1,100 s was 9.8 × 10¹¹ particles/s, whereas the amount of discharged PM in Comparative example 1 was 1.5 × 10¹² particles/s. Referring to Fig. 12, the PM emission in Comparative example 2 was the largest and 0.022 g/km, and the PM emission in Comparative example 1 was the second largest and 0.007 g/km. The PM emission in Example 1 was the smallest and 0.003 g/km. As the foregoing results, it was observed that Example 1 allows more effective oxidization of PM than Comparative example 1 while maintaining the same average discharged power as that in Comparative example 1.

The subject international patent application claims a priority based on Japanese Patent Application No. 2009-063430 filed with the Japan Patent Office on March 16, 2009. The entire disclosure of Japanese Patent Application No. 2009-063430 is incorporated by reference into the subject international application.

The foregoing description of the specific embodiments of the present invention is provided only for the purpose of illustration. These embodiments are not intended to encompass the present invention or limit the present invention to the embodiments described herein. It is apparent for persons skilled in the art that numerous changes and modifications are possible in light of the foregoing description.

### DESCRIPTION OF REFERENCE SIGNS

- 4: Exhaust gas purification apparatus
- 8: Power source
- 10: ECU
- 22: Plasma generation part
- 28: Gas flow passage

## Claims

1. An exhaust gas purification apparatus, comprising:
a gas flow passage that is formed to let exhaust gas pass therethrough;
plasma generation means for generating plasma in the gas flow passage upon supply of power;
a variable-voltage power source for supplying power to the plasma generation means with a variable application voltage of the power to be supplied; and
voltage control means for changing the application voltage based on a change in amount of PM passing through the gas flow passage.

2. An exhaust gas purification apparatus, comprising:
a gas flow passage that is formed to let exhaust gas pass therethrough;
plasma generation means for generating plasma in the gas flow passage upon supply of power;
a variable-frequency power source for supplying power to the plasma generation means with a variable frequency of application voltage of the power to be supplied; and
frequency control means for changing the frequency of the application voltage based on a change in flow rate of gas passing through the gas flow passage.

3. An exhaust gas purification apparatus, comprising:
a gas flow passage that is formed to let exhaust gas pass therethrough;
plasma generation means for generating plasma in the gas flow passage upon supply of power;
a variable voltage/variable frequency power source for supplying power to the plasma generation means with a variable application voltage and a variable frequency of the application voltage of the power to be supplied; and
voltage/frequency control means for changing the application voltage based on a change in amount of PM passing through the gas flow passage and changing the frequency of the application voltage based on a change in flow rate of gas passing through the gas flow passage.
